(19) Europäisches Patentamt
European Patent Office
Office européen des brevets

(11) **EP 4 393 552 A1**

(12) **EUROPEAN PATENT APPLICATION**
published in accordance with Art. 153(4) EPC

(43) Date of publication:
**03.07.2024 Bulletin 2024/27**

(21) Application number: **22861620.7**

(22) Date of filing: **17.08.2022**

(51) International Patent Classification (IPC):
**A62B 18/08** (2006.01)        **A62B 18/00** (2006.01)
**A62B 18/10** (2006.01)        **A62B 23/02** (2006.01)
**G01N 15/02** (2006.01)        **G06F 11/32** (2006.01)
**H04M 1/72412** (2021.01)        **G06F 11/30** (2006.01)

(52) Cooperative Patent Classification (CPC):
**A62B 18/006; A62B 9/006; A62B 18/025;
A62B 18/088**

(86) International application number:
**PCT/KR2022/012240**

(87) International publication number:
**WO 2023/027410 (02.03.2023 Gazette 2023/09)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **23.08.2021 KR 20210110993**

(71) Applicant: **LG Electronics Inc.**
**Yeongdeungpo-gu**
**Seoul 07336 (KR)**

(72) Inventors:
• **CHOI, Chiyoung**
  **Seoul 08592 (KR)**
• **KIM, Hojung**
  **Seoul 08592 (KR)**
• **PARK, Hyungho**
  **Seoul 08592 (KR)**
• **LEE, Keonwang**
  **Seoul 08592 (KR)**

(74) Representative: **Ter Meer Steinmeister & Partner
Patentanwälte mbB
Nymphenburger Straße 4
80335 München (DE)**

(54) **MASK DEVICE AND CONTROL METHOD THEREFOR**

(57)    A mask device according to an embodiment of the present invention comprises: a mask cover, which has air suction ports, and has, mounted thereon, filters for filtering air flowing in through the air suction ports; a mask body, which is coupled to the rear of the mask cover, and has an air ejection port through which air having passed through the filters passes; fan modules, which each comprise a fan and a fan motor, are disposed between the mask body and the mask cover, and allow the air having passed through the filters to flow toward the air ejection port; and a control part, which controls the number of revolutions of the fan motors, and predicts information about the lifespan of the filters so as to provide the predicted information about the lifespan of the filters to a user.

FIG. 1

**Description**

[Technical Field]

The present disclosure relates to a mask device and a control method therefor.

[Background Art]

In general, a mask is a device that covers the nose and mouth of a user to prevent inhalation of germs, dust, or the like, and droplet transmission by viruses or bacteria.

The mask is in close contact with the user's face to cover the user's nose and mouth. The mask filters germs, dust, or the like included in the air introduced into the user's nose and mouth, and allows the filtered air to be introduced into the user's mouth and nose. Air and germs, dust, or the like included in the air pass through the body of the mask including the filter, and germs, dust, or the like is filtered by the body of the mask.

However, since external air is introduced into the nose and mouth of the user after passing through the body of the mask, and the air exhaled by the user also flows out to the outside after passing through the body of the mask, the user's breathing does not occur smoothly. Recently, a mask equipped with a motor, a fan, and a filter has been developed in order to solve the above-mentioned inconvenience of breathing.

For example, In Korean Patent Publication No. No. 10-2020-0037497 a "contamination information notification system of a mask" is disclosed. The mask according to the prior art measures contamination information according to the use of the mask to determine when to replace the filter.

However, according to the prior art, contamination information can be measured by a contamination detection sensor and the replacement time of a filter mounted on a mask can be determined according to the degree of contamination, but it is difficult to provide a filter replacement time in consideration of filter performance that varies according to the type of filter. In addition, according to the prior art, it is difficult to provide a filter replacement time in consideration of the life of the filter because the filter replacement time is determined based on the contamination information detected by the contamination detection sensor.

[Disclosure]

[Technical Problem]

An object of the present disclosure is to provide a mask device for improving the above problems.

Specifically, an object of the present disclosure is to provide a mask device capable of providing filter replacement timing in consideration of filter performance.

In addition, an object of the present disclosure is to provide a mask device capable of providing filter replacement timing in consideration of the life of the filter.

[Technical Solution]

A mask device according to an embodiment of the present disclosure for achieving the above object may include a mask cover equipped with a filter and having an air suction opening; a mask body coupled to a rear side of the mask cover and having an air discharge opening through which the air passing through the filter passes; a fan module for flowing air from the air suction opening toward the air discharge opening, and a controller controlling the operation of the fan module, predicting information about the life of the filter, and providing the predicted information to the user and thus a filter replacement time may be provided to the user.

In addition, the mask device may include a filter replacement notification portion for providing information on the life of the filter to provide various information about the filter to the user.

In addition, in the mask device, the information on the life of the filter includes information on the filter remaining life and information on the filter remaining time to provide information suitable for the time of use of the filter or to provide information suitable for future use.

In addition, since the mask device calculates information about the life of the filter based on the filter dust capacity that can be collected by the filter and the accumulated dust amount collected by the filter, an accurate filter replacement time can be provided.

In addition, the mask device may provide information about the life of the filter to a user using devices capable of communicating with the mask device, including a communication portion that transmits and receives information about the life of the filter.

[Advantageous Effect]

According to the mask device according to the embodiment of the present disclosure having the above configuration, the following effects are obtained.

First, according to the present disclosure, it is possible to provide a replacement time of the filter in consideration of the dust collecting state of the filter.

Second, since the life of the filter is predicted based on the fine dust collected in the filter and the capacity of the filter to collect dust, an accurate filter replacement time can be derived.

Third, by providing information on the life of the filter, it is possible for the user to intuitively grasp the replacement time of the filter.

Fourth, the information on the life of the filter is transmitted to various devices through communication so that the user can recognize the information about the life of the filter through the various devices.

[Description of Drawings]

FIG. 1 is a left perspective view illustrating a mask device according to an embodiment of the present disclosure.

FIG. 2 is a right perspective view illustrating a mask device according to an embodiment of the present disclosure.

FIG. 3 is a rear view illustrating a mask device according to an embodiment of the present disclosure.

FIG. 4 is a bottom view illustrating a mask device according to an embodiment of the present disclosure.

FIG. 5 is an exploded perspective view illustrating a mask device according to an embodiment of the present disclosure.

FIGS. 6 and 7 are views illustrating the flow of air when operating the mask device according to an embodiment of the present disclosure.

FIG. 8 illustrates a mask system according to the present disclosure.

FIG. 9 is a configuration diagram of a mask device according to the present disclosure.

FIG. 10 is a control method for performing a filter replacement notification mode with a mask device according to the present disclosure.

[Best Mode]

Hereinafter, a mask device according to an embodiment of the present disclosure will be described in detail with reference to the drawings.

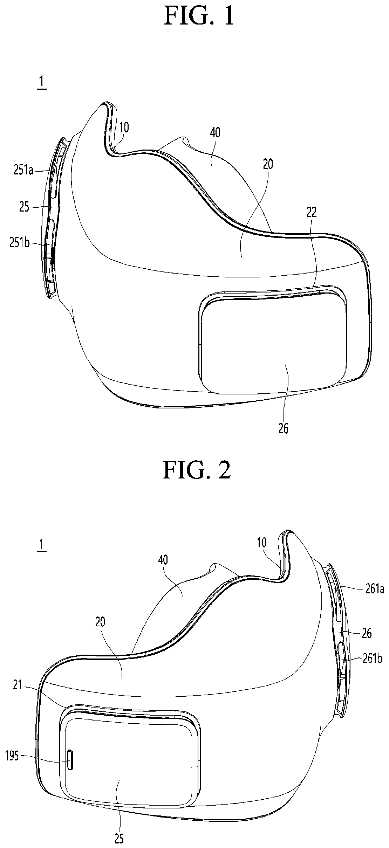

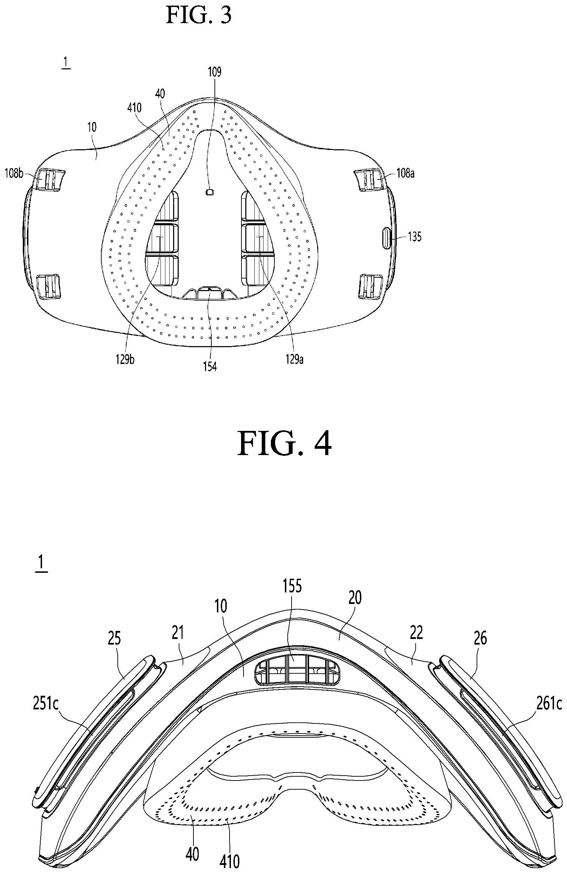

FIG. 1 is a left perspective view illustrating a mask device according to an embodiment of the present disclosure, FIG. 2 is a right perspective view illustrating a mask device according to an embodiment of the present disclosure, FIG. 3 is a rear view illustrating a mask device according to an embodiment of the present disclosure, and FIG. 4 is a bottom view illustrating a mask device according to an embodiment of the present disclosure.

Referring to FIGS. 1 to 4, a mask device 1 according to an embodiment of the present disclosure may include a mask body 10 and a mask body cover 20 coupled to the mask body 10.

The mask body 10 and the mask body cover 20 may be separably coupled. When the mask body 10 and the mask body cover 20 are coupled, an inner space may be formed between the mask body 10 and the mask body cover 20. Components for driving the mask device 1 may be disposed in the inner space. The inner space may be formed between the front surface of the mask body 10 and the rear surface of the mask body cover 20. The mask body 10 may define the rear surface of the mask device 1, and the mask body cover 20 may define the front surface of the mask device 1.

The rear of the mask device 1 defines the direction in which the rear surface of the mask device 1 facing the user's face is located, and the front of the mask device 1 is the opposite direction of the rear and is defined as the direction in which the front of the mask device exposed to the outside is located.

The mask device 1 may further include a sealing portion 40 separably coupled to the mask body 10.

When the sealing portion 40 is coupled to the rear surface of the mask body 10, the sealing portion 40 may be supported by the mask body 10. When the sealing portion 40 is separated from the rear surface of the mask body 10, the rear surface of the mask body 10 is exposed to the outside, and the user can clean easily the rear surface of the mask body 10 and the sealing portion 40.

When the sealing portion 40 is supported on the rear surface of the mask body 10, a breathing space S for breathing may be defined between the sealing portion 40 and the rear surface of the mask body 10. The sealing portion 40 may be in close contact with the user's face and surround the user's nose and mouth to restrict external air from entering the breathing space.

The mask body cover 20 may include a first filter mounting portion 21 and a second filter mounting portion 22.

The first filter mounting portion 21 may be located on the right side of the mask body cover 20, and the second filter mounting portion 22 may be located on the left side of the mask body cover 20.

Based on the mask device 1 worn on the user's face, a left direction (left) and a right direction (right) are defined. In other words, while the user is wearing the mask device 1, the right side of the user is defined as the right side of the mask device 1, and the left side of the user is defined as the left side of the mask device 1.

In addition, based on the mask device 1 mounted on the user's face, an upward direction (upward) and a downward direction (downward) are defined.

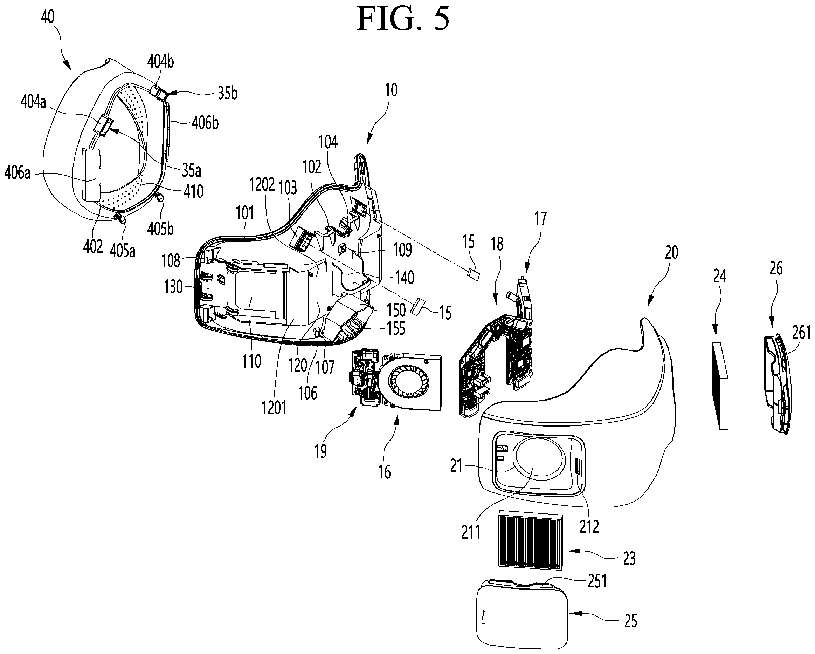

A first filter cover 25 may be mounted on the first filter mounting portion 21, and a second filter cover 26 may be mounted on the second filter mounting portion 22. Filters 23 and 24 (see FIG. 5) are disposed inside the first filter mounting portion 21 and the second filter mounting portion 22, and the first filter cover 25 and the second filter cover 26 may cover the filter.

The first filter cover 25 and the second filter cover 26 may be separably coupled to the first filter mounting portion 21 and the second filter mounting portion 22. For example, the first filter cover 25 and the second filter cover 26 may be fitted and coupled to the first filter mounting portion 21 and the second filter mounting portion 22, respectively.

Each of the first filter cover 25 and the second filter cover 26 may include a front portion and a side portion extending rearward along an edge or a rear edge of the front portion.

Each of the side portions of the first filter cover 25 and the second filter cover 26 may include four side surfaces, and the four side surfaces may include an upper side surface, a lower side surface, a left side surface, and a right side surface.

One or a plurality of first air inlets 251 may be formed on a side surface of the first filter cover 25. One or a plurality of second air inlets 261 may also be formed on the side surface of the second filter cover 26.

When the first filter cover 25 is mounted on the first filter mounting portion 21, the first air inlet 251 may be exposed to the outside. When the second filter cover 26 is mounted on the second filter mounting portion 22, the second air inlet 261 may be exposed to the outside.

The first air inlet 251 and the second air inlet 261 may be formed on side surfaces of the first filter cover 25 and the second filter cover 26. Although not illustrated, it should be noted that each of the first and second air inlets 251 and 261 may be formed on the front surface of each of the first and second filter covers 25 and 26.

The first air inlet 251 and the second air inlet 261 may be formed at points closer to the front portion from a line bisecting the side portion.

When a plurality of first air inlets 251 are provided on the side portion of the first filter cover 25, the first air inlets 251 may include first air suction holes 251a formed on the right surface, a second air suction hole 251b formed on the left surface, and a third air suction hole 251c formed on the upper surface.

Similarly, when a plurality of second air inlets 261 are provided on the side surface of the second filter cover 26, the second air inlets 261 may include first air suction hole 261a formed on the left surface, a second air suction hole 261b formed on the right surface, and a third air suction hole 261c formed on the upper side.

Meanwhile, an opening 250 may be formed in any one of the first filter cover 25 and the second filter cover 26, and the opening 250 may be formed on either edge of the first filter cover 25 and the second filter cover 26. In addition, a manipulation portion 195 for controlling the operation of the mask device 1 may be mounted in the opening 250. In this embodiment, an example in which the manipulation portion 195 is mounted on the first filter cover 25 will be described.

The manipulation portion 195 may function as an operation switch for turning on/off the power of the mask device 1. The manipulation portion 195 may be exposed toward the front of the mask device 1 in a state of being mounted in the opening 250.

The mask body 10 may include a hook mounting portion 108. The hook mounting portion 108 may be provided on the left and right sides of the mask body 10.

In other words, the hook mounting portion 108 may include a first hook mounting portion 108a provided on the right side of the mask body 10 and a second hook mounting portion 108b provided on the left side of the mask body 10.

Each of the first hook mounting portion 108a and the second hook mounting portion 108b may be provided in plural to be spaced apart from each other in the vertical direction of the mask body 10. In detail, the first hook mounting portion 108a may be provided on the upper right and lower right sides of the mask body 10, and the second hook mounting portion 108b may be provided on the upper left and lower left sides of the mask body 10.

A band for keeping the mask device 1 in close contact with the user's face may be mounted on the hook mounting portion 108.

For example, both end portions of the band may connect the first hook mounting portion 108a and the second hook mounting portion 108b, or may connect two first hook mounting portions 108a spaced apart in the vertical direction and two second hook mounting portions 108ba spaced apart in the vertical direction, respectively.

In the former case, the band will be wrapped around the back of the user's head, and in the latter case, the band will be engaged to both ears of the user.

The hook mounting portion 108 may be formed by cutting a portion of the mask body 10. Therefore, air may be introduced into the inner space between the mask body 10 and the mask body cover 20 through the gap formed in the hook mounting portion 108.

In detail, external air introduced into the inner space through the hook mounting portion 108 may cool the electronic components disposed in the inner space. In addition, the air whose temperature rises while cooling the electronic components may be discharged to the outside of the mask body 10 through the hook mounting portion 108 again. In addition, in order to limit the air introduced into the inner space through the hook mounting portion 108 from being introduced into the breathing space, the inside of the mask device 1 may have a sealing structure.

The mask body 10 may include an air discharge opening 129 for supplying filtered air to the breathing space. The user may inhale and breathe the filtered air supplied to the breathing space through the air discharge opening 129.

The air discharge opening 129 may include a first air discharge opening 129a for ejecting filtered air introduced into the first air inlet 251 into the breathing space, and a second air discharge opening 129b for ejecting filtered air introduced into the second air inlet 261 into the breathing space.

The first air discharge opening 129a may be disposed on the right side with respect to the center of the mask body 10, and the second air discharge opening 129b may be disposed on the left side. The air introduced into the first air inlet 251 may flow to the first air discharge opening 129a after passing through the filter 23. Air introduced into the second air inlet 261 may flow to the second air discharge opening 129b after passing through the filter 24.

The mask body 10 may include air outlets 154 and 155 for discharging air exhaled by the user to an external space. The air outlets 154 and 155 may be located below the mask body 10.

The air outlets 154 and 155 may include a first outlet 154 formed on the lower end of the front surface of the mask body 10 and a second air outlet 155 formed on the lower surface of the mask body 10.

In detail, a rib extending forward may be formed at the lower end of the front surface of the mask body 10, and a surface defined by the rib may be defined as a bottom surface of the mask body 10.

A flow space passing through the first air outlet 154 and flowing downward toward the second air outlet 155 may be formed between the mask body 10 and the mask body cover 20.

A check valve may be formed at one or more of the first air outlet 154 and the second air outlet 155. A phenomenon in which external air is introduced into the breathing space or air discharged through the second air outlet 155 flows backward may be prevented by the check valve.

The check valve may be located in a flow space between the first air outlet 154 and the second air outlet 155.

For example, a check valve in the form of a flat flap having a size and shape corresponding to the size and shape of the first air outlet 154 may be provided.

In detail, the upper end of the flap is connected to the upper edge of the first air outlet 154, so that when the user exhales, the flap bends or rotates to open the first air outlet 154, and when the user inhales, the flap comes into close contact with the first air outlet 154 to prevent external air or discharged air from re-introducing into the breathing space.

The mask body 10 may include a sensor mounting portion 109. A sensor for obtaining various types of information from the breathing space may be mounted on the sensor mounting portion 109. The sensor mounting portion 109 may be located above the mask body 10. The sensor mounting portion 109 may be positioned above the mask body 10 in consideration of a position where a pressure change in the breathing space can be constantly detected when a user breathes.

The mask body 10 may include a connector hole 135. The connector hole 135 may be understood as an opening in which a connector 192 for supplying power to the mask device 1 is installed. The connector hole 135 may be formed on any one side of the left edge and the right edge of the mask body 10.

In this embodiment, since the manipulation portion 195 and the connector 192 are connected to a power module 19 (see FIG. 5) to be described later, the connector hole 135 may be provided on any one side of the left and right sides of the mask body 10 corresponding to a position where the power module 19 is installed.

Hereinafter, components of the mask device 1 will be described in detail based on an exploded perspective view.

FIG. 5 is an exploded perspective view illustrating a mask device according to an embodiment of the present disclosure.

Referring to FIG. 5, the mask device 1 according to the present disclosure may include a mask body 10, a mask body cover 20, and a sealing portion 40.

In detail, the mask body 10 and the mask body cover 20 may be coupled to each other to form the outer shape of the mask device 1.

An internal space for accommodating components for operating the mask device 1 may be formed between the mask body 10 and the mask body cover 20. The sealing portion 40 is coupled to the rear surface of the mask body 10 to form a breathing space between the user's face and the mask body 10 and can prevent external air from introducing the breathing space.

The mask body 10 may include a cover coupling groove 101. The cover coupling groove 101 may be formed along the front edge of the mask body 10. The cover coupling groove 101 may be formed by a step. The cover coupling groove 101 may be formed to correspond to the edge of the mask body cover 20. The cover coupling groove 101 may be formed by recessing a portion of the front surface of the mask body 10 backward. The mask body cover 20 may be inserted into the cover coupling groove 101 by moving the mask body cover 20 toward the cover coupling groove 101 of the mask body 10.

The mask body 10 may include a first cover coupling portion 102. An upper portion of the mask body cover 20 may be supported by the first cover coupling portion 102. The first cover coupling portion 102 may be formed on the upper portion of the front surface of the mask body 10.

For example, the first cover coupling portion 102 may have a structure to which a hook can be coupled. A hook coupled to the first cover coupling portion 102 may be formed on the rear surface of the mask body cover 20.

A plurality of first cover coupling portions 102 may be provided, and a plurality of hooks corresponding to the first cover coupling portions 102 also may be provided. In this embodiment, the first cover coupling portion 102 may be provided on the left and right sides with respect to the center of the mask body 10. The first cover coupling portion 102 may be referred to as an upper cover coupling portion.

The mask body 10 may include a first sealing coupling portion 103. The first sealing coupling portion 103 may be located above the mask body 10. The first sealing coupling portion 103 may support an upper portion of the sealing portion 40.

For example, the first sealing coupling portion 103 is configured to couple the sealing portion 40 to the mask body 10 by magnetic force. To this end, a first magnetic member 15 may be provided in the first sealing coupling portion 103. The first magnetic member 15 may include either a magnet or a metal attached to a magnet.

The first magnetic member 15 may be fixed to the front surface of the mask body 10, and the sealing portion 40 may contact the rear surface of the mask body 10. In this embodiment, the first sealing coupling portion 103 may be formed in a rib shape where the front surface of the mask body 10 protrudes forward and surrounds the first magnetic member 15. The first magnetic member 15 may be inserted into and fixed to the first sealing coupling portion 103 formed in the rib shape. In this embodiment, it will be described that the first magnetic member 15 is provided as a magnet.

The first sealing coupling portion 103 may be provided on the left side and the right side, respectively, based on the center of the mask body 10. The first sealing coupling portion 103 may be defined as an upper sealing coupling portion.

The first magnetic member 15 may include a right first magnetic member mounted on the right first sealing coupling portion 103 and a left first magnetic member mounted on the left first sealing coupling portion 103.

A first body coupling portion 404 is formed in the sealing portion 40 so that the sealing portion 40 can be coupled to the mask body 10 by the magnetic force of the first magnetic member 15, and a second magnetic member 35 may be mounted on the first body coupling portion 404.

The first body coupling portion 404 is formed to firmly fix the second magnetic member 35. The second magnetic member 35 may include either a magnet or a metal attached to a magnet. In this embodiment, the second magnetic member 35 is described as being made of metal, but the first magnetic member 15 and the second magnetic member 35 may be made of opposite materials. In other words, one of the first magnetic member 15 and the second magnetic member 35 may be a magnet and the other may be a metal attached to the magnet.

The first body coupling portion 404 may be provided in plural to correspond to the plurality of first sealing coupling portions 103. The mask body 10 may include a support rib 104.

The support rib 104 may protrude forward from the front surface of the mask body 10. The support rib 104 may come into contact with the rear surface of the mask body cover 20 when the mask body cover 20 is coupled to the mask body 10.

The mask body 10 and the mask body cover 20 can resist external forces acting in the front and rear direction by the support ribs 104. A plurality of support ribs 104 may be provided on the front surface of the mask body 10.

Meanwhile, the support rib 104 may perform a function of fixing a portion of the control module 18 mounted on the mask body 10. To this end, the support rib 104 may be formed in a hook shape. In other words, an engagement protrusion protrudes from the end portion of the support rib 104 to fix the end portion of the control module 18.

The mask body 10 may include a second cover coupling portion 106.

The lower portion of the mask body cover 20 may be supported by the second cover coupling portion 106. The second cover coupling portion 106 may protrude from the lower portion of the front surface of the mask body 10 in the shape of a hook. The first cover coupling portion 102 may be provided on the left side and the right side, respectively, based on the center of the mask body 10. The second cover coupling portion 106 may be defined as a lower cover coupling portion.

On the rear surface of the mask body cover 20, hook engagement portions to which the second cover coupling portions 106 are coupled may be formed on left and right sides of the mask body cover 20, respectively.

The mask body 10 may include a second sealing coupling portion 107.

A lower portion of the sealing portion 40 may be supported by the second sealing coupling portion 107. The second sealing coupling portion 107 may be formed by opening the mask body 10. The second sealing coupling portion 107 may be located under the mask body 10. For example, the second sealing coupling portion 107 may be defined as a through-hole formed in the mask body 10.

A second body coupling portion 405 inserted into the second sealing coupling portion 107 may be formed in the sealing portion 40. A plurality of second sealing coupling portions 107 are provided, and A plurality of second body coupling portions 405 may also be provided to correspond to the second sealing coupling portion 107. In this embodiment, the second sealing coupling portion 107 may be provided on the left side and the right side based on the center of the mask body 10, respectively. The second sealing coupling portion 107 may be defined as a lower sealing coupling portion.

The mask body 10 may include the sensor mounting portion 109 mentioned above.

The sensor mounting portion 109 may be formed in a rib shape in which a portion of the front surface of the mask body 10 protrudes forward. In detail, the sensor mounting portion 109 is formed in the form of a rib around the edge of the sensor, and an installation space in which the sensor is installed is formed inside the sensor mounting portion 109.

A hole through which the installation space communicates with the breathing space is formed in the mask body 10 corresponding to the inside of the sensor mounting portion 109. The sensor disposed in the installation space includes a pressure sensor, and the pressure sensor may sense pressure information of the breathing space through the hole.

The mask body 10 may include a fan module mounting portion 110.

The fan module mounting portion 110 may include a first fan module mounting portion to which the first fan module 16 is mounted and a second fan module mounting portion to which the second fan module 17 is mounted.

The first fan module mounting portion and the second fan module mounting portion may be formed on the front surface of the mask body 10. In detail, the first fan module mounting portion may be disposed on the right side of the mask body 10, and the second fan module mounting portion may be disposed on the left side of the mask body 10.

Each of the first fan module 16 and the second fan module 17 may be separably coupled to the first fan module mounting portion and the second fan module mounting portion.

The mask body 10 may include an air duct portion 120.

The air duct portion 120 may be formed on the front surface of the mask body 10.

A flow path through which air may pass may be formed inside the air duct portion 120.

The air duct portion 120 may include a first air duct portion connected to the first fan module mounting portion and a second air duct portion connected to the second fan module mounting portion.

The first air duct portion and the second air duct portion, in order to be positioned between the first fan module mounting portion and the second fan module mounting portion, may be disposed the edge of the first fan module mounting portion adjacent to the center of the front surface of the mask body 10 and the edge of the second fan module mounting portion, respectively.

In addition, the first fan module mounting portion and the second fan module mounting portion may have symmetrical shapes based on a vertical plane (or vertical line) passing through the center of the front surface of the mask body 10. Similarly, the first air duct portion and the second air duct portion may also have symmetrical shapes based on a vertical plane or a vertical line passing through the center of the front surface of the mask body 10.

One end portion of the air duct portion 120 communicates with the outlets of the fan modules 16 and 17 so that outside air is introduced into the air duct portion 120. In addition, the other end portion of the air duct portion 120 communicates with the air discharge opening 129, so that the outside air introduced into the air duct portion 120 is ejected to the breathing space S.

A control module 18 may be mounted on the front surface of the air duct portion 120.

A portion of the air duct portion 120 may be formed as a curved portion 1201, and the remaining portion of the air duct portion 120 may be formed as a flat portion 1202. The control module 18 may be fixed to the flat portion 1202. The curved portion 1201 of the air duct portion 120 comes into contact with the fan module mounting portion 110 to allow outside air to be introduced therein, and the flat portion 1202 comes into contact with the air discharge opening 129 to allow the introduced outside air to be supplied to the breathing space S.

It can be described that the control module 18 is located in front of the flat portion and the flow path of the air duct portion 120 is located in the rear.

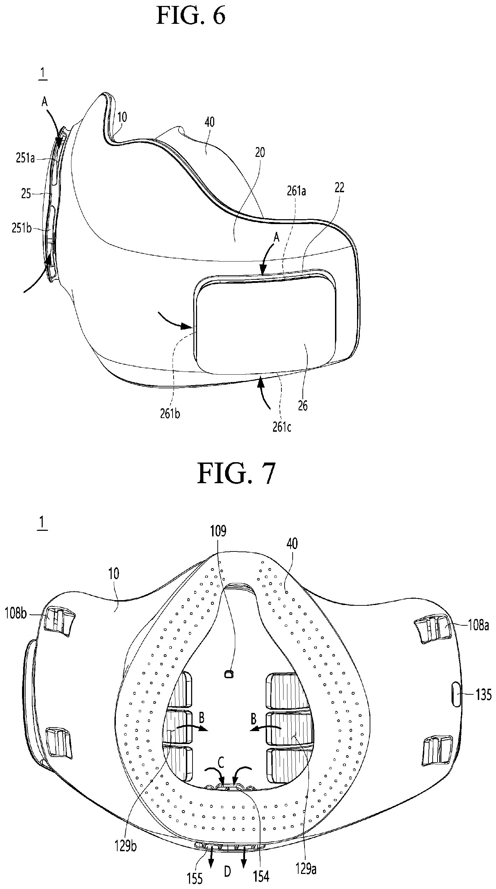

The front surface of the flat portion 1202 may be defined as a control module seating portion on which the control module 18 is seated. In addition, a concavo-convex portion may be formed on the rear surface of the flat portion 1202 (see FIG. 7).

The mask body 10 may include a power module mounting portion 130 for mounting the power module 19 thereon.

The power module mounting portion 130 may be formed on the front surface of the mask body 10. The power module mounting portion 130 may be provided on any one side of the left and right sides of the mask body 10.

The power module mounting portion 130 may be located at a side of the fan module mounting portion 110. Specifically, the power module mounting portion 130 may be provided between the fan module mounting portion 110 and the side end portion of the mask body 10. The side end portion of the mask body 10 may be defined as an end portion adjacent to the user's ear when worn. In addition, the connector hole 135 may be located at the side end portion of the mask body 10 where the power module mounting portion 130 is provided.

The mask body 10 may include a battery mounting portion 140 for mounting a battery.

The battery mounting portion 140 may be formed centrally on the front surface of the mask body 10. The battery mounting portion 140 may protrude forward from the front surface of the mask body 10 and surround the battery.

For example, the battery mounting portion 140 may include a pair of guide ribs protruding forward from the front surface of the mask body 10 and a connection rib connecting front end portions of the pair of guide ribs. In addition, the battery may be mounted in a battery accommodation space defined by the pair of guide ribs and the connection rib.

The battery may be inserted into the battery accommodation space by moving from an upper side to a lower side of the battery accommodation space, and may be separated by moving in a reverse direction. A lower portion of the battery inserted into the battery mounting portion 140 may be supported by an air outlet 150 to be described later.

The mask body 10 may include an air outlet 150.

The air outlet 150 may be formed at a lower portion of the mask body 10. The air outlet 150 forms a flow space in which air flowing from the first air outlet 154 toward the second air outlet 155 flows.

The air outlet 150 may protrude forward from the front surface of the mask body 10. In addition, the air outlet 150 may be extended in an arch shape or may be bent multiple times and extended.

When the mask body cover 20 is coupled to the mask body 10, the front end portion of the air outlet 150 comes into contact with the rear surface of the mask body cover 20, and the inner space of the mask body 10 and the flow space are separated.

The air outlet 150 may define an upper surface and both side surfaces of the flow space, and a rear surface of the mask body cover 20 may define a front surface of the flow space. In addition, the front surface of the mask body 10 may define the rear surface of the flow space, and the bottom surface of the mask body 10 where the second air outlet 155 is formed may define the bottom surface of the flow space.

An upper surface of the air outlet 150 may support a lower end of the battery. Both lower ends of the air outlet 150 formed in an arch shape or tunnel shape are connected to the lower surface of the mask body 10, and the lower surface of the mask body 10 may be defined by a rib extending from the lower front surface of the mask body 10 to the front.

The cover coupling groove 101 is recessed along the front end of the rib forming the bottom surface of the mask body 10, and the lower end of the rear surface of the mask body cover 20 is coupled to the cover coupling groove 101.

The first air outlet 154 may be formed on the front surface of the mask body 10 defining the rear surface of the flow space.

As described above, the mask body cover 20 may include a pair of filter mounting portions 21 and 22.

The filter mounting portions 21 and 22 may be formed by recessing the front surface of the mask body cover 20 toward the rear surface by a predetermined depth. The filters 23 and 24 are accommodated inside the filter mounting portions 21 and 22 formed by being recessed, and the filter cover 25 and 26 may be mounted on the edge of the filter mounting portions 21 and 22 in a state where the filters 23 and 24 are accommodated.

Air suction openings 211 and 221 may be formed in the filter mounting portions 21 and 22. The air suction openings 211 and 221 may communicate with fan suction openings formed on front surfaces of the fan modules 16 and 17. Edges of the air suction openings 211 and 221 may have inclined surfaces inclined in a direction in which diameters decrease from the front to the rear.

Filter cover mounting grooves 212 and 222 for fixing the filter covers 25 and 26 may be formed on side surfaces of the filter mounting portions 21 and 22. Coupling protrusions inserted into the filter cover mounting grooves 212 and 222 may be formed on the filter covers 25 and 26. Although only the coupling protrusion 262 formed on the left filter cover 26 is illustrated in FIG. 5, it should be noted that the same coupling protrusion is also formed on the right filter cover 25.

A sealing material may be provided between the rear edges of the air suction openings 211 and 221 of the filter mounting portions 21 and 22 and the fan suction openings of the fan modules 16 and 17. The sealing material surrounds edges of the air suction openings 211 and 221 and the suction openings of the fan modules 16 and 17 to prevent external air from being introduced.

Alternatively, instead of providing the sealing material, orifices are formed at the edges of the air suction openings 211 and 221, and the orifices come into close contact with the edges of the fan suction openings of the fan modules 16 and 17 so that the introduction of outside air may be prevented. The orifice may be understood as a guide rib that extends or protrudes rearward along the edge of the air suction openings 211 and 221.

The filter mounting portions 21 and 22 may include a first filter mounting portion 21 provided on the right side of the mask body cover 20 and a second filter mounting portion 22 provided on the left side of the mask body cover 20.

An air suction opening formed in the first filter mounting portion 21 may be defined as a first air suction opening 211, and an air suction opening formed in the second filter mounting portion 22 may be defined as a second air suction opening 221.

The filters 23 and 24 may include a first filter 23 accommodated inside the first filter mounting portion 21 and a second filter 24 accommodated inside the second filter mounting portion 22.

The filter covers 25 and 26 may include a first filter cover 25 mounted on the first filter mounting portion 21 and a second filter cover 26 mounted on the second filter mounting portion 22. A plurality of first air inlets 251 for introducing external air may be formed in the first filter cover 25, and a plurality of second air inlets 261 for introducing external air may be formed in the second filter cover 26.

The control module 18 may be referred to as a first electronic circuit component, and the power module 19 may be referred to as a second electronic circuit component.

The fan modules 16 and 17 may include a fan, a fan motor, and a fan housing accommodating the fan and the fan motor. A fan suction opening through which air is introduced into the fan and a fan discharge opening through which air forcedly flowing by the fan is ejected may be formed in the fan housing.

It should be noted that the fan includes a centrifugal fan that suctions in air from the front of the mask body cover 20 and ejects the air to the side of the mask body 10, but does not exclude an axial fan or a cross-flow fan.

The air introduced into the first air inlet 251 and passed through the first filter 23 is suctioned into the first air suction opening 211. In addition, the air introduced into the second air inlet 261 and passed through the second filter 24 is suctioned into the second air suction opening 221.

The fan discharge opening of the first fan module 16 communicates with the first air duct portion 120a to discharge air into the breathing space, and the fan outlet of the second fan module 17 communicates to the second air duct portion 120b to eject air into the breathing space.

The control module 18 may control the operation of the mask device 1. The control module 18 may be fixed to the control module mounting portion 1202.

The control module 18 may include a communication module and transmit/receive various types of information. The control module 18 may include a data storage module and store various types of information.

The control module 18 may control the operation of the fan modules 16 and 17. In detail, the control module 18 may control the operation of the fan modules 16 and 17 based on information detected by a sensor.

The control module 18 may be electrically connected to and interlocked with the power module 19, the fan modules 16 and 17, and the battery.

The power module 19 may receive power from the outside. The power module 19 may include a charging circuit for charging the battery. The power module 19 may include the connector 192 and the manipulation portion 195. Accordingly, the control module 18 may operate by receiving battery power or external power through the connector 192.

The power module 19 may control power supply to the mask device 1 through manipulation of the manipulation portion 195. In detail, the power module 19 may control power supply from the battery to the control module 18 and the fan modules 16 and 17.

The sealing portion 40 may be coupled to the rear surface of the mask body 10 and is in close contact with the user's face.

The rear surface of the mask body 10 can be kept state of being spaced spart from the user's face by the sealing portion 40.

The sealing portion 40 may be formed in a ring shape forming a closed loop. The sealing portion 40 may be made of a material having elasticity. The sealing portion 40 may be in close contact with the user's face and deformed along the contour of the user's face.

The sealing portion 40 may be separably coupled from the mask body 10. With this structure, the sealing portion 40 can be separated from the mask body 10 and washed.

The sealing portion 40 may be formed in a ring shape forming a closed loop. Since the sealing portion 40 is formed in a ring shape, a breathing space may be formed between the mask body 10 and the user's face by surrounding the user's nose and mouth. The sealing portion 40 can be deformed to be capable of being in close contact with the user's face, and can be made of a material that has excellent moisture resistance and airtightness and is easy to clean. For example, the sealing portion 40 may be made of a polymer material such as silicone or rubber.

The sealing portion 40 may be coupled to the rear surface of the mask body 10. The sealing portion 40 may further include a first body coupling portion 404, a second body coupling portion 405, and a sealing insertion portion 406 for coupling with the mask body 10.

The sealing portion 40 may further include a sealing close-contact portion 402 for being in close contact with the mask body 10. The sealing close contact portion 402 may protrude from the sealing portion 40 toward the mask body 10. When the sealing portion 40 is mounted on the rear surface of the mask body 10, the sealing close contact portion is interposed between the mask body 10 and the sealing portion 40 and thus blocks the gap between the mask body 10 and the sealing portion 40.

A second magnetic member 35 for coupling with the first magnetic member 15 is mounted on the sealing portion 40, and the sealing portion 40 to which the second magnetic member 35 is mounted can be defined as a sealing assembly. The sealing portion 40 may include a first body coupling portion 404. A plurality of first body coupling portions 404 are provided and may be disposed on both sides of the upper portion of the sealing portion 40. The first body coupling portion 404 can be understood as a configuration that allows the sealing portion 40 to be fixed to the mask body 10. The second magnetic member 35 may be mounted to the first body coupling portion 404. The plurality of first body coupling portions 404 may include a first body coupling portion 404a on one side and a first body coupling portion 404b on the other side.

The sealing portion 40 may include a second body coupling portion 405. A plurality of second body coupling portions 405 are provided and may be disposed on both sides of the lower portion of the sealing portion 40. In this embodiment, the second body coupling portion 405 may be formed in a hook shape inserted into the second sealing coupling portion 107. The second body coupling portion 405 may be engaged and fixed to the lower portion of the mask body 10. The second body coupling portion 405 may be separated from the mask body 10 when the engagement from the mask body 10 is released. The plurality of second body coupling portions 405 may include a second body coupling portion 405a on one side and a second body coupling portion 405b on the other side.

The sealing portion 40 may include a sealing insertion portion 406. A plurality of sealing insertion portions 406 are provided and may be disposed on both sides of the central portion of the sealing portion 40. The sealing insertion portions 406 may be inserted into the cutout 127 of the mask body 10 and positioned at the center of the rear surface of the mask body 10. The sealing insertion portion 406 may form a portion of the flow path of the air duct portion 120 to allow air to flow toward the air outlet 129. The sealing insertion portion 406 may perform a function of guiding the mounting position of the sealing portion 40 when the sealing portion 40 is mounted on the rear surface of the mask body 10. The plurality of sealing insertion portions 406 may include a sealing insertion portion 406a on one side and a sealing insertion portion 406b on the other side.

Meanwhile, the sealing portion 40 may include a plurality of ventilation holes 410. The ventilation hole 410 may remove moisture due to sweat that may occur on the user's face. In the ventilation hole 410, air in the breathing space S may be ejected toward the user's face through the ventilation hole 410. The ventilation hole 410 may be formed on one surface of the sealing portion 40 in contact with the user's face. The plurality of ventilation holes 410 may have different diameters. In addition, the plurality of ventilation holes 410 may be disposed to have a certain arrangement.

FIGS. 6 and 7 are views illustrating the flow of air when operating the mask device according to an embodiment of the present disclosure.

Referring to FIGS. 6 and 7, the mask device 1 according to the present disclosure may suction external air through air inlets 251 and 261 formed in filter covers 25 and 26. A flow direction of external air suctioned into the mask device 1 is indicated by A.

Since a plurality of air inlets 251 and 261 are configured to suction air in various directions, an inlet amount of external air can be increased.

For example, the air inlets 251 and 261 may include upper air inlets 251a and 261a for suctioning air flowing in the upper portion of the filter covers 25 and 26, side air inlets 251b and 261b for suctioning air flowing in the side of the filter covers 25 and 26, and lower air inlets 251c and 261c for suctioning air flowing in the lower portion of the filter covers 25 and 26. The side air inlets 251b and 261b may be formed on one or both sides of the left and right sides of the filter covers 25 and 26.

Since the filter covers 25 and 26 in which the air inlets 251 and 261 are formed are disposed on the left and right sides of the front surface of the mask device 1, the outside air can be smoothly suctioned from the left and right sides of the front surface of the mask device 1.

External air introduced through the air inlets 251 and 261 may filter foreign substances while passing through the filters 23 and 24 mounted inside the filter mount portions 21 and 22. The filters 23 and 24 can be replaced after separating the filter covers 25 and 26 from the mask device 1.

The air passing through the filters 23 and 24 may be introduced into the fan suction openings of the fan modules 16 and 17 through the air suction openings 211 and 221. Since the filter mounting portions 21 and 22 where the air suction openings 211 and 221 are formed and the fan modules 16 and 17 are assembled in a state of being in close contact with each other, it can be prevented air passing through the filter from being leaked to the outside or external air from being introduced between the filter mount portions 21 and 22 and the fan modules 16 and 17.

Air discharged through the fan discharge openings of the fan modules 16 and 17 may be introduced into the breathing space S through the air discharge opening 129 after passing through the air duct portion 120. A flow direction of air introduced into the breathing space S through the air discharge opening 129 is indicated by B.

The breathing space may be defined by the mask body 10 and the sealing portion 40. When the mask body 10 is brought into close contact with the user's face, the sealing portion 40 is brought into close contact with the mask body 10 and the user's face to form an independent breathing space separated from the external space.

When the user inhales and then exhales the filtered air supplied through the air discharge opening 129, the air that comes out may be discharged to an external space through the air outlets 154 and 155.

As described above, the air outlets 154 and 155 include a first air outlet 154 communicating with the breathing space and a second air outlet 155 communicating with the external space, and the first air outlet 154 and the second air outlet 155 may communicate with each other by a flow space defined by the air outlet 150. In other words, the air exhaled by the user is guided to the flow space through the first air outlet 154. A flow direction of air flowing into the flow space through the first air outlet 154 is indicated by C.

The air guided to the flow space through the first air outlet 154 may be discharged to an external space through the second air outlet 155. A flow direction of air discharged to the external space through the second air outlet 155 is indicated by D.

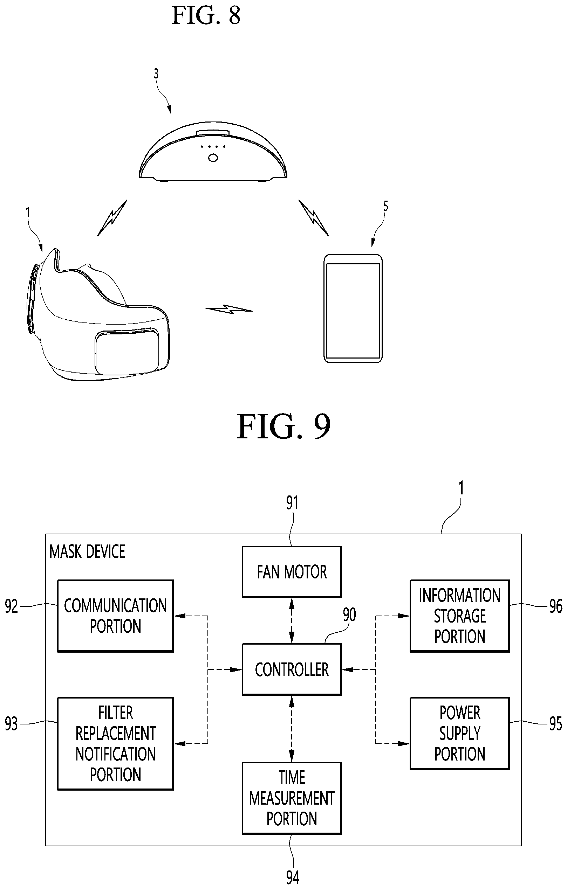

FIG. 8 illustrates a mask system according to the present disclosure, and FIG. 9 is a configuration diagram of a mask device according to the present disclosure.

Referring to FIGS. 8 and 9, the mask device 1 according to the present disclosure performs a filter replacement notification mode alone, or filters replacement notification mode can be performed in conjunction with at least one of the mask storage device 3 and the terminal 5.

Hereinafter, configurations for performing the filter replacement notification mode will be described.

The mask device 1 according to the present disclosure may include a controller 90 for controlling operation. The controller 90 controls all operations of the mask device 1, and the control module 18 may be included in the controller 90. Without being limited to this idea, the controller 90 may be the same as the control module 18 installed in the mask device 1, or may be provided as a single component distinct from the control module 18. The controller 90 may control the operation of components included in the mask device 1.

The mask device 1 may include a fan motor 91 for driving a fan. The fan motor 91 may be provided in the fan modules 16 and 17. The fan motor 91 may control the rotation speed of the fan. The operation of the fan motor 91 may be controlled by the controller 90. The controller 90 may adjust the rotation speed of the fan motor 91 according to whether or not the user breathes. For example, the rotation speed of rotations of the fan motor 91 may be increased when the user breathes in, and the rotation speed of the fan motor 91 may be decreased when the user exhales. The controller 90 may calculate the amount of air supplied to the user based on the rotation speed of the fan motor 91.

The mask device 1 may further include a communication portion 92 for transmitting information. The communication portion 92 may perform a function of transmitting information of the mask device 1 to the outside or receiving external information at the mask device 1. The communication portion 92 may be provided as a communication module suitable for communication standards. For example, the mask device 1 may transmit and receive information with at least one of the mask storage device 3 and the terminal 5 using the communication portion 92.

The mask device 1 may further include a filter replacement notification portion 93 for providing filter replacement information. The filter replacement notification portion 93 may display to the user the replacement timing of the filters 23 and 24 mounted on the mask device 1. The filter replacement notification portion 93 may be provided on an outer surface of the mask device 1. For example, the filter replacement notification portion 93 may be provided as an LED or 7-segment that visually provides information, may be provided as a speaker that provides information audibly, may be provided as a vibration module that vibrates the mask device 1, or the like. It is not limited to these ideas. In the present disclosure, the operation of the filter replacement notification portion 93 may be controlled by the controller 90. In other words, the controller 90 may collect information about the life of the filter and control the operation of the filter replacement notification portion 93 based on the information about the life of the filter.

The mask device 1 may further include a time measurement portion 94 for acquiring time information. The time measurement portion 94 may measure the operating time of the mask device 1. The time measurement portion 94 may calculate the accumulated operation time of the fan by integrating the time from when the fan starts to rotate to when the fan stops. In addition, the time measurement portion 94 may calculate the accumulated filter use time by integrating the time from the time the filter is mounted to the time the filter is detached. In addition, the time measurement portion 94 may calculate the usage time of the mask device 1 by integrating the time from when the operation of the mask device 1 starts to when the operation is stopped.

The mask device 1 may further include a power supply portion 95 for supplying power. The power supply portion 95 may supply power to the mask device 1. The power supply portion 95 may include a battery and the power module 19.

The mask device 1 may further include an information storage portion 96 for storing operating information and obtained information. The information storage portion 96 can be understood as a memory for storing information. In the information storage portion 96, information using in the mask device 1 such as information transmitted and received through the communication portion 92, operation information of the fan motor 91, time information calculated by the time measurement portion 94, operation information of the filter replacement notification portion, and operation information of the power supply portion 95 may be stored.

Hereinafter, the filter replacement notification mode of the mask device 1 will be described.

The filter may filter foreign substances contained in the air by a size exclusion mechanism. Since the filter filters foreign substances using the size exclusion mechanism, the amount of foreign substances collected in the filter and the life of the filter may be in inverse proportion to each other. Also, since the amount of air that can pass through the filter decreases as the life of the filter decreases, the filter needs to be replaced periodically. However, since it is difficult for a user to determine the life of a filter with the naked eye, a filter replacement notification mode for guiding replacement of a filter at an appropriate time is required.

The mask device 1 according to the present disclosure may grasp information about the life of the filter and perform a filter replacement notification mode based on the information about the life of the filter. Information on the life of the filter may be grasped through the controller 90.

The filter replacement notification mode may notify the user that the filter needs to be replaced at a time when the filter needs to be replaced based on the information about the life of the filter. The time when the replacement of the filter is required can be understood as the time when the efficiency of the filter is reduced below the standard recommended by the Ministry of Food and Drug Safety.

The information about the life of the filter may include an accumulated amount of dust collected by the filter and a dust holding capacity capable of being collected by the filter.

The dust holding capacity may be changed according to the material constituting the filter. In Korea, the filter may be classified according to the "KF" index representing particle blocking performance, and the higher the KF index, the higher the dust blocking rate of small particles. The dust holding capacity can be changed by the dust collection efficiency that can be blocked for each KF index, the face intake resistance, the leak rate, and the blocking material. The filter in the present disclosure is composed of a filter having a KF 94 index and a filter having a KF 80 index.

[Table 1]

| Division | Air volume level | Air volume (L/M) | Dust holding capacity ($\mu$g) | | Accumulated amount of dust per hour ($\mu$g) | Filter life (hour) | | Note |
|---|---|---|---|---|---|---|---|---|
| | | | 94% upon arrival | 80% upon arrival | | 94% | 80% | |
| PM10 Standard | Weak wind | 30 | 29,800 | 112,400 | 75.38 | 392 | 1491 | The PM10 standard is the annual average PM10 concentration standard for 3 years (Notice of the Ministry of Environment, 42.3 $\mu$g/m$^3$) |
| | Medium wind | 40 | | | 100.50 | 294 | 1118 | |
| | Strong wind | 55 | | | 138.19 | 214 | 813 | |

Table 1 is a measurement table in which the life of a filter was actually measured using a filter composed of a KF 94 index and a filter composed of a KF 80 index. The measurement table is information measured based on PM10.

In Table 1 above, the air volume level and the air volume represent changes in air volume generated by changing the rotation speed of the fan motor stepwise and changing the rotation speed of the fan motor stepwise. The formula for calculating air volume is as follows.

$$[\text{Equation 1}]$$
$$Q \text{ (Air volume)} = \text{Area } (A) \text{ X Velocity } (V)$$

In Equation 1 above, the area is an area through which air can pass due to rotation of the fan, and the speed can be calculated by the speed of air passing through the area and the rotation speed of the fan motor rotating the fan. An accumulated amount of dust accumulating in the filter may be calculated based on the air volume calculated through the area and the speed. For example, the area may be defined as a cross-sectional area of a space where the fan is installed and air flows.

In Table 1 above, the dust holding capacity in the filter composed of the KF 94 index is the dust holding capacity measured when the face air suction resistance reaches the standard pressure while blocking more than 94% of the fine particles, and the dust holding capacity in the filter composed of the KF 80 index is the dust holding capacity measured when the face air suction resistance reaches the standard pressure while blocking more than 80% of the fine particles.

In Table 1 above, the accumulated dust amount per hour represents the measured amount of accumulated dust amount that can be collected by the filter for 1 hour using the air volume.

In Table 1 above, the life of the filter is derived based on the dust holding capacity and the accumulated dust amount per hour.

Accumulated dust amount for calculating the life of the filter is calculated as follows.

Accumulated dust amount = $\Sigma PM10$ (Fine dust) X $Q$ (Air volume) X $\eta$ (Dust power collection efficiency) X $t$ (Use time)  [Equation 2]

In Equation 2 above, the PM10 indicates the average PM10 concentration for three years as a standard as notice by the Ministry of Environment.

In Equation 2 above, the dust collection efficiency represents the dust collection efficiency of the filter.

In Equation 2 above, the use time is time information detected by the time measurement portion 94 and represents the actual use time of the filter.

The remaining life (%) of the filter and the remaining time (h) of the filter are calculated by the following equations.

[Equation 3]

a.     Remaining filter life (%)=(1-( Cumulative dust amount / Dust holding capacity))X100%

Filter remaining time (h)=(Dust holding capacity - accumulated dust amount)/(PM10 X $Q_{average}$ X $\eta$ X $10^{-6}$X60)

[Equation 3]

In Equation 3 above, the filter remaining life may be calculated as a percentage. Calculating the filter remaining life as a percentage is because it is efficient to display the life of the filter as a percentage to the user.

In Equation 3 above, the filter remaining life is calculated based on the accumulated dust amount and the dust holding capacity. The filter remaining life represents the ratio of the accumulated dust amount collected in the filter at the time of operation until the dust holding capacity of the filter is reached at the time when the filter needs to be replaced.

When the filter remaining life is provided to the user, the user can recognize the filter remaining life and predict a replacement time of the filter.

In Equation 4 above, the filter remaining time is also calculated based on the accumulated dust amount and dust holding capacity.

From the filter remaining time in Equation 4 above, it is possible to calculate the usable replacement scheduled time from the time of operation until the filter mounted on the mask device 1 reaches the replacement time.

The filter remaining time can be calculated on an hourly basis based on the dust holding capacity at the time when the filter needs to be replaced, the accumulated amount of dust collected in the filter at the time of operation, the average air volume, and the dust collection efficiency.

When the filter remaining time is provided to the user, the user can recognize the filter remaining time and replace the filter after the filter remaining time has elapsed.

Hereinafter, the mask device 1 alone performing the filter replacement notification mode will be described.

The mask device 1 may include a filter replacement notification portion.

The mask device 1 can grasp information about the life of the filter. When information on the life of the filter is identified, the controller 90 may display information on the filter replacement notification portion 93 based on the information about the life of the filter.

For example, the controller 90 may display information about the filter, such as the filter remaining time and the filter remaining life, on the filter replacement notification portion 93. In addition, the controller 90 may accumulate the operation time of the filter, and display information on the filter replacement notification portion 93 when the accumulated operation time of the filter approaches or reaches the filter remaining time.

Hereinafter, performing a filter replacement notification mode in conjunction with at least one of the mask device 1, the mask storage device 3, and the terminal 5 will be described.

The mask device 1 may include a communication portion 92.

The mask device 1 may transmit and receive information with at least one of the mask storage device 3 and the terminal 5 through the communication portion 92. The mask device 1 may generate information about the life of the filter and transmit the information about the life of the filter to the communication portion 92.

At least one of the mask storage device 3 and the terminal 5 may receive information transmitted from the communication portion 92.

The mask storage device 3 may further include a filter replacement notification portion for displaying information received from the mask device 1. Information received from the mask device 1 may be displayed in a filter replacement notification portion of the mask storage device 3.

The terminal 5 may display the information received from the mask device 1 to the user through an application or the like.

In this embodiment, short-distance proximity communication is presented with the mask storage device 3 and the terminal 5 as an example, but it is not limited to this idea. For example, information transmitted from the mask device 1 is received by an Internet server, and the information can be transmitted to the mask storage device 3 and the terminal 5 through the Internet server.

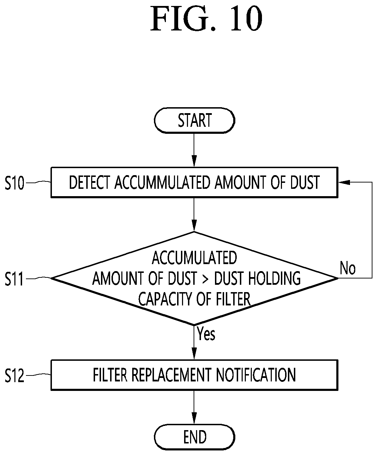

FIG. 10 is a control method for performing a filter replacement notification mode with a mask device according to the present disclosure.

Referring to FIG. 10, in the filter replacement notification mode according to the present disclosure, the accumulated amount of dust can be detected by the mask device 1 (S10). The accumulated amount of dust may be derived from the mask device 1. The accumulated amount of dust may be derived by calculating the amount of dust collected in the filter from the time when the operation of the mask device 1 starts to the present time. Since the accumulated amount of dust is calculated based on the accumulated operating time from the time a new filter is mounted on the mask device 1 to the present time, the efficiency of using the filter to be installed can be maximized.

The mask device 1 may compare the calculated accumulated amount of dust with the dust holding capacity of the filter (S11). When the detected accumulated amount of dust is smaller than the dust holding capacity of the filter, it is determined that more dust can be collected in the filter, and the accumulated dust amount can be monitored according to operating time.

When the detected accumulated dust amount is greater than or equal to the dust holding capacity of the filter, it is determined that it is impossible to collect more dust in the filter, and the mask device 1 operates the filter replacement notification portion 93 and thus a filter replacement notification may be performed (S12).

The filter replacement notification is provided through the filter replacement notification portion 93 of the mask device 1, or may be provided through the terminal 5 communicating with the communication portion 92 of the mask device 1, the mask storage device 3, an Internet server or the like. When the filter replacement notification is provided, information on the life of the filter may also be provided. For example, the filter replacement notification may be provided to the user through an application of the terminal 5. The application of the terminal 5 may provide information about the life of the filter to the user, and display the filter replacement notification based on the information about the life of the filter.

It is not limited to this event, and in the step of comparing the accumulated dust amount and the dust holding capacity of the filter, information on the life of the filter is provided through the terminal 5, the mask storage device 3, the Internet server, or the like can be provided to the user. The information on the life of the filter is continuously transmitted through the communication portion 92 and can be checked immediately through the terminal 5, the mask storage device 3, and the Internet server.

When the filter replacement notification is provided through the filter replacement notification portion 93 of the mask device 1, the mask device 1 may stop operating. In addition, when the filter replacement notification is provided through the filter replacement notification portion 93 of the mask device 1, the mask device 1 may continue to operate according to a user's selection.

When the filter of the mask device 1 is replaced, the mask device 1 may newly acquire information about the life of the newly installed filter after initializing the information about the life of the filter to be replaced.

**Claims**

1. A mask device comprising:

    a mask cover having an air suction opening and on which a filter for filtering air introduced into the air suction opening is mounted;
    a mask body coupled to a rear side of the mask cover and having an air discharge opening through which the air passing through the filter passes;
    a fan module composed of a fan and a fan motor, disposed between the mask body and the mask cover, and allowing the air passing through the filter to flow toward the air discharge opening; and
    a controller configured to control the rotation speed of the fan motor, predict information about the life of the filter, and provide information about the predicted life of the filter to a user.

2. The mask device of claim 1, further comprising a filter replacement notification portion for displaying information on the predicted life of the filter.

3. The mask device of claim 1, further comprising a time measurement portion for measuring an operating time of the fan motor and a use time of the filter.

4. The mask device of claim 3, wherein the information on the predicted life of the filter includes information on the filter remaining life and information on the filter remaining time.

5. The mask device of claim 4, wherein the information on the filter remaining life and the information on the filter remaining time are calculated based on the dust holding capacity and the accumulated dust amount of the filter.

6. The mask device of claim 5, wherein the accumulated dust amount is calculated based on an air volume, a dust collection efficiency of the filter, and a use time of the filter.

7. The mask device of claim 6, wherein the air volume is calculated based on the rotation speed of the fan motor.

8. The mask device of claim 2, further comprising a communication portion for transmitting and receiving information on the life of the filter,
wherein the controller transmits information on the life of the filter to at least one of a terminal and a mask storage device using the communication portion to display the information on the life of the filter in at least one of the terminal and the mask storage device.

9. The mask device of claim 1, wherein the mask cover further includes a filter mounting portion defining a space in which the filter is mounted and in which the air suction opening is formed, and
wherein a filter cover having a plurality of air inlets for introducing outside air is mounted on the filter mounting portion.

10. The mask device of claim 9, wherein the mask body further includes:

an air duct portion through which the air forcedly flowing by the fan module passes by connecting the air suction opening and the air discharge opening; and
an air outlet for passing air discharged toward an external space.

11. A method for controlling a mask device, comprising:

detecting an accumulated dust amount in a filter provided in the mask device by operating the mask device;
comparing the detected accumulated dust amount with the dust holding capacity of the filter; and
providing replacement notification information of the filter based on a comparison value between the detected accumulated dust amount and the dust holding capacity of the filter.

12. The method for controlling a mask device of claim 11,
wherein the replacement notification information of the filter includes information on the filter remaining life calculated based on the dust holding capacity and the accumulated dust amount of the filter, and information on the filter remaining time.

13. The method for controlling a mask device of claim 12, wherein the accumulated dust amount is calculated based on the air volume calculated by the rotation speed of the fan motor, the dust collection efficiency of the filter, and the use time of the filter detected by the time measurement portion provided in the mask device.

14. The method for controlling a mask device of claim 11, further comprising

a communication portion for transmitting and receiving replacement notification information of the filter,
wherein the communication portion transmits filter replacement notification information to at least one of a terminal and a mask storage device to display the filter replacement notification information in at least one of the terminal and the mask storage device.

15. The method for controlling a mask device of claim 11, further comprising a filter replacement notification portion for providing replacement notification information of the filter.

# FIG. 1

# FIG. 2

# FIG. 3

# FIG. 4

FIG. 5

# FIG. 6

# FIG. 7

# FIG. 8

# FIG. 9

MASK DEVICE

FAN MOTOR — 91

COMMUNICATION PORTION — 92

CONTROLLER — 90

INFORMATION STORAGE PORTION — 96

FILTER REPLACEMENT NOTIFICATION PORTION — 93

POWER SUPPLY PORTION — 95

TIME MEASUREMENT PORTION — 94

# FIG. 10

```
          ┌──────────┐
          │  START   │
          └──────────┘
                │
                ▼
S10 ──  ┌─────────────────────────────────────┐  ◄──────┐
        │ DETECT ACCUMMULATED AMOUNT OF DUST   │         │
        └─────────────────────────────────────┘         │
                │                                        │
                ▼                                        │
              ╱────────────────────╲                     │
            ╱   ACCUMULATED          ╲      No            │
S11 ──    ╱  AMOUNT OF DUST > DUST     ╲ ─────────────────┘
          ╲  HOLDING CAPACITY          ╱
            ╲   OF FILTER             ╱
              ╲────────────────────╱
                │ Yes
                ▼
S12 ──  ┌─────────────────────────────────────┐
        │   FILTER REPLACEMENT NOTIFICATION    │
        └─────────────────────────────────────┘
                │
                ▼
          ┌──────────┐
          │   END    │
          └──────────┘
```

## INTERNATIONAL SEARCH REPORT

International application No.

**PCT/KR2022/012240**

### A. CLASSIFICATION OF SUBJECT MATTER

**A62B 18/08**(2006.01)i; **A62B 18/00**(2006.01)i; **A62B 18/10**(2006.01)i; **A62B 23/02**(2006.01)i; **G01N 15/02**(2006.01)i; **G06F 11/32**(2006.01)i; **H04M 1/72412**(2021.01)i; **G06F 11/30**(2006.01)i

According to International Patent Classification (IPC) or to both national classification and IPC

### B. FIELDS SEARCHED

Minimum documentation searched (classification system followed by classification symbols)

A62B 18/08(2006.01); A41D 13/11(2006.01); A61F 9/06(2006.01); A62B 18/00(2006.01); A62B 18/02(2006.01); A62B 23/02(2006.01); A62B 7/10(2006.01); G01F 1/05(2006.01); G01F 1/34(2006.01); G02F 1/133(2006.01); G08B 21/18(2006.01); H04M 1/72412(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 마스크 장치(mask device), 마스크 커버(mask cover), 마스크 몸체(mask body), 팬 모듈(fan module), 필터(filter), 수명(lifetime)

### C. DOCUMENTS CONSIDERED TO BE RELEVANT

| Category* | Citation of document, with indication, where appropriate, of the relevant passages | Relevant to claim No. |
|---|---|---|
| X | KR 10-2018-0092363 A (MOK, Sang Su) 20 August 2018 (2018-08-20)<br>See paragraphs [0031]-[0076], claims 11 and 13 and figures 1-9. | 1-2,8-10 |
| Y | | 3-7,11-15 |
| Y | US 2019-0175411 A1 (3M INNOVATIVE PROPERTIES COMPANY) 13 June 2019 (2019-06-13)<br>See paragraphs [0087]-[0089], table 2 and figures 1 and 16. | 3-7,11-15 |
| A | KR 10-2020-0037497 A (KIM, Phil Lip) 09 April 2020 (2020-04-09)<br>See claims 1-3 and 6 and figures 1-3 and 9. | 1-15 |
| A | KR 10-2020-0096484 A (CLEANSPACE IP PTY LTD) 12 August 2020 (2020-08-12)<br>See claims 1-2, 7 and 33 and figures 1-7. | 1-15 |

✓ Further documents are listed in the continuation of Box C.  ✓ See patent family annex.

| | |
|---|---|
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **28 November 2022** | **28 November 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
|---|
| **PCT/KR2022/012240** |

**C.     DOCUMENTS CONSIDERED TO BE RELEVANT**

| Category* | Citation of document, with indication, where appropriate, of the relevant passages | Relevant to claim No. |
|---|---|---|
| A | US 2015-0082914 A1 (ARGON ELECTRONICS (UK) LTD.) 26 March 2015 (2015-03-26)<br>See claims 1-22 and figures 1-2. | 1-15 |
| PX | KR 10-2022-0030170 A (LG ELECTRONICS INC.) 10 March 2022 (2022-03-10)<br>See claims 1-15 and figures 1-10.<br>(* This document is a published earlier application that serves as a basis for claiming<br>priority of the present international application.) | 1-15 |

Form PCT/ISA/210 (second sheet) (July 2022)

INTERNATIONAL SEARCH REPORT
Information on patent family members

International application No.

**PCT/KR2022/012240**

| Patent document cited in search report | | | Publication date (day/month/year) | Patent family member(s) | | | Publication date (day/month/year) |
|---|---|---|---|---|---|---|---|
| KR | 10-2018-0092363 | A | 20 August 2018 | KR | 10-1941856 | B1 | 24 January 2019 |
| US | 2019-0175411 | A1 | 13 June 2019 | AU | 2017-281368 | A1 | 28 December 2017 |
| | | | | AU | 2017-281368 | A1 | 17 January 2019 |
| | | | | AU | 2017-281906 | A1 | 17 January 2019 |
| | | | | CA | 3028977 | A1 | 28 December 2017 |
| | | | | CA | 3028987 | A1 | 28 December 2017 |
| | | | | CA | 3029217 | A1 | 28 December 2017 |
| | | | | CA | 3029238 | A1 | 28 December 2017 |
| | | | | CA | 3029239 | A1 | 28 December 2017 |
| | | | | CN | 109310894 | A | 05 February 2019 |
| | | | | CN | 109310894 | B | 05 March 2021 |
| | | | | CN | 109414602 | A | 01 March 2019 |
| | | | | EP | 3474958 | A1 | 01 May 2019 |
| | | | | EP | 3474958 | B1 | 28 July 2021 |
| | | | | EP | 3475894 | A1 | 01 May 2019 |
| | | | | EP | 3475896 | A1 | 01 May 2019 |
| | | | | IL | 263703 | A | 27 February 2020 |
| | | | | JP | 2019-528503 | A | 10 October 2019 |
| | | | | JP | 2021-002356 | A | 07 January 2021 |
| | | | | JP | 5825299 | B2 | 02 December 2015 |
| | | | | JP | 6807405 | B2 | 06 January 2021 |
| | | | | KR | 10-2019-0014100 | A | 11 February 2019 |
| | | | | KR | 10-2019-0014101 | A | 11 February 2019 |
| | | | | KR | 10-2019-0022684 | A | 06 March 2019 |
| | | | | KR | 10-2019-0022685 | A | 06 March 2019 |
| | | | | KR | 10-2019-0022686 | A | 06 March 2019 |
| | | | | KR | 10-2416408 | B1 | 04 July 2022 |
| | | | | KR | 10-2438591 | B1 | 31 August 2022 |
| | | | | RU | 2715116 | C1 | 25 February 2020 |
| | | | | RU | 2718976 | C1 | 15 April 2020 |
| | | | | RU | 2719555 | C1 | 21 April 2020 |
| | | | | RU | 2719814 | C1 | 23 April 2020 |
| | | | | US | 10542332 | B2 | 21 January 2020 |
| | | | | US | 10610708 | B2 | 07 April 2020 |
| | | | | US | 10849790 | B2 | 01 December 2020 |
| | | | | US | 11023818 | B2 | 01 June 2021 |
| | | | | US | 2017-0368381 | A1 | 28 December 2017 |
| | | | | US | 2017-0372216 | A1 | 28 December 2017 |
| | | | | US | 2017-0374436 | A1 | 28 December 2017 |
| | | | | US | 2018-0270549 | A1 | 20 September 2018 |
| | | | | US | 2019-0175960 | A1 | 13 June 2019 |
| | | | | US | 2019-0175961 | A1 | 13 June 2019 |
| | | | | US | 2020-0120405 | A1 | 16 April 2020 |
| | | | | US | 2021-0248505 | A1 | 12 August 2021 |
| | | | | US | 9998804 | B2 | 12 June 2018 |
| | | | | WO | 2017-223367 | A1 | 28 December 2017 |
| | | | | WO | 2017-223438 | A1 | 28 December 2017 |
| KR | 10-2020-0037497 | A | 09 April 2020 | KR | 10-2103221 | B1 | 23 April 2020 |
| KR | 10-2020-0096484 | A | 12 August 2020 | AU | 2018-340666 | A1 | 16 April 2020 |
| | | | | CN | 111511443 | A | 07 August 2020 |

Form PCT/ISA/210 (patent family annex) (July 2022)

INTERNATIONAL SEARCH REPORT
Information on patent family members

International application No.

**PCT/KR2022/012240**

| Patent document cited in search report | Publication date (day/month/year) | Patent family member(s) | | | Publication date (day/month/year) |
|---|---|---|---|---|---|
| | | CN | 111511443 | B | 02 September 2022 |
| | | CN | 113304409 | A | 27 August 2021 |
| | | CN | 113304409 | B | 12 July 2022 |
| | | EP | 3687635 | A1 | 05 August 2020 |
| | | JP | 2020-534966 | A | 03 December 2020 |
| | | RU | 2757182 | C1 | 11 October 2021 |
| | | US | 2020-0282242 | A1 | 10 September 2020 |
| | | WO | 2019-060947 | A1 | 04 April 2019 |
| US 2015-0082914 A1 | 26 March 2015 | CA | 2867630 | A1 | 03 October 2013 |
| | | CA | 2867630 | C | 28 April 2020 |
| | | EP | 2830716 | A1 | 04 February 2015 |
| | | GB | 2492863 | A | 16 January 2013 |
| | | GB | 2492863 | B | 29 May 2013 |
| | | NZ | 629186 | A | 29 April 2016 |
| | | US | 9322684 | B2 | 26 April 2016 |
| | | WO | 2013-144534 | A1 | 03 October 2013 |
| KR 10-2022-0030170 A | 10 March 2022 | None | | | |

Form PCT/ISA/210 (patent family annex) (July 2022)

25

**REFERENCES CITED IN THE DESCRIPTION**

**Patent documents cited in the description**

- KR 1020200037497